# EUROPEAN PATENT APPLICATION

(11) **EP 4 773 623 A1**
(43) Date of publication of application: **08.07.2026**
(21) Application number: 24881085.5
(22) Date of filing: 03.07.2024
(51) Int. Cl.: H04Q 11/00

(54) **PASSIVE OPTICAL NETWORK ARCHITECTURE, DATA TRANSMISSION METHOD, AND MASTER DEVICE**

(30) Priority: 25.10.2023 CN 202311395124
(71) Applicant: ZTE CORPORATION, Shenzhen, Guangdong 518057 (CN)
(72) Inventor: ZHANG, Weiliang, Shenzhen, Guangdong 518057 (CN); ZHANG, Haijun, Shenzhen, Guangdong 518057 (CN); XIONG, Jie, Shenzhen, Guangdong 518057 (CN)
(74) Representative: Chimini, Francesco
(86) International application number: PCT/CN2024/103420
(87) International publication number: WO 2025/086711

(57) **Abstract**

Provided are a passive optical network architecture, a data transmission method, and a main unit. The architecture includes an FTTH optical line terminal, the main unit, and a sub FTTR unit, where each FTTH optical line terminal is connected to at least one main unit, each main unit is connected to at least one sub FTTR unit, and the main unit is configured to establish a forwarding channel between the FTTH optical line terminal and the sub FTTR unit, and forward, at an equal delay, an upstream frame and a downstream frame between the FTTH optical line terminal and the sub FTTR unit through the forwarding channel.

## Description

### Cross-Reference to Related Application

The present disclosure is based on China Patent Application CN202311395124.X filed on October 25, 2023 and entitled "Passive optical network architecture, data transmission method, and master device" and claims the benefit of priority to the patent application, the disclosure of which is incorporated in its entirety herein by reference.

### Technical Field

The present disclosure relates to the field of passive optical networks, and particularly relates to a passive optical network architecture, a data transmission method, and a main unit.

### Background

As an optical fiber access technique, fiber to the room (FTTR) is aimed at extending an optical fiber network to a room of a user, to provide the user with a high-speed, stable and wider-coverage network connection. As communication technology continuously develops, the FTTR has gradually entered a stage of scale deployment, and standardization has gradually matured.

Similar to fiber to the home (FTTH), the FTTR uses a point-to-multipoint network topology. The FTTR is composed of a main FTTR unit (MFU) connected to a plurality of sub FTTR units (SFUs) through an indoor fiber distribution network (IFDN). The FTTH is composed of an optical line terminal (OLT) connected to a plurality of optical network units (ONUs) through an optical distribution network (ODN).

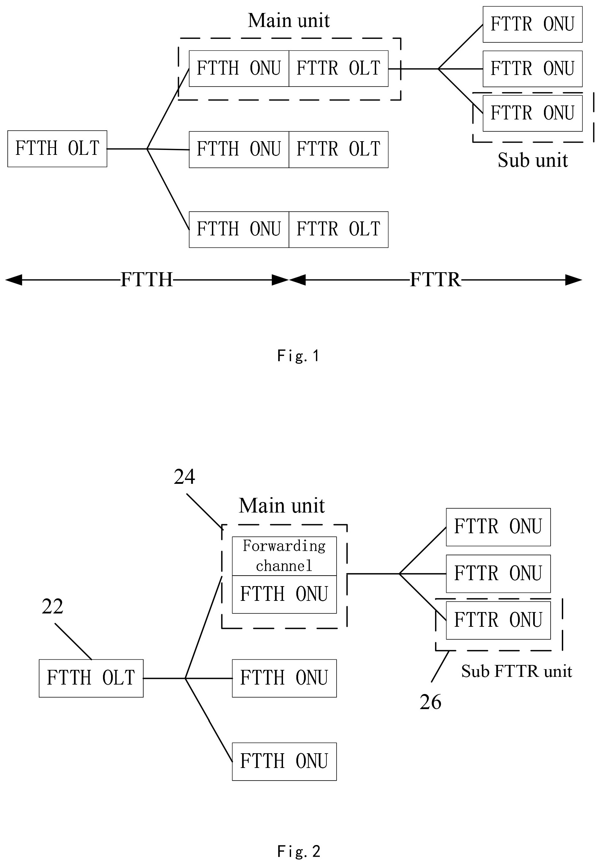

Fig. 1 is a schematic architecture diagram of an FTTH network and an FTTR network. As shown in Fig. 1, when the FTTH network and the FTTR network are networked together, the ONUs in the FTTH network are replaced with main units, and the main units are composed of FTTH ONUs and FTTR OLTs. In current networking application, the FTTH ONUs and the FTTR OLTs in the main units are required to exchange services through an upper layer protocol such as an Ethernet protocol. The FTTR network and the FTTH network are two independent networks. Each network performs network management and resource allocation by its own OLTs. Coordination cannot be achieved, low-delay service transmission cannot be achieved, and unified management and operation by an operator cannot be facilitated.

To sum up, no excellent solution is proposed for the above technical problems.

### Summary

The examples of the present disclosure provide a passive optical network architecture, to solve at least a problem that cooperative networking of fiber to the room (FTTR) and fiber to the home (FTTH) cannot be performed in the related art.

According to an example of the present disclosure, a passive optical network architecture is provided. The architecture includes an FTTH optical line terminal, a main unit, and a sub FTTR unit. Each FTTH optical line terminal is connected to at least one main unit. Each main unit is connected to at least one sub FTTR unit. The main unit is configured to establish a forwarding channel between the FTTH optical line terminal and the sub FTTR unit, and forward, at an equal delay, an upstream frame and a downstream frame between the FTTH optical line terminal and the sub FTTR unit through the forwarding channel.

According to another example of the present disclosure, a data transmission method is provided. The data transmission method is applied to a passive optical network architecture. The architecture includes an FTTH optical line terminal, a main unit, and a sub FTTR unit. Each FTTH optical line terminal is connected to at least one main unit. Each main unit is connected to at least one sub FTTR unit. The method includes: forwarding, at an equal delay, a downstream frame from the FTTH optical line terminal to the sub FTTR unit through a forwarding channel between the FTTH optical line terminal and the sub FTTR unit, and forwarding, at an equal delay, an upstream frame from the sub FTTR unit to the FTTH optical line terminal through the forwarding channel. The forwarding channel is established by the main unit.

According to yet another example of the present disclosure, a main unit is provided. The main unit is applied to a passive optical network architecture. The architecture includes an FTTH optical line terminal, a main unit, and a sub FTTR unit. Each FTTH optical line terminal is connected to at least one main unit. Each main unit is connected to at least one sub FTTR unit. The main unit is configured to establish a forwarding channel between the FTTH optical line terminal and the sub FTTR unit, and forward, at an equal delay, an upstream frame and a downstream frame between the FTTH optical line terminal and the sub FTTR unit through the forwarding channel.

### Brief Description of the Drawings

Fig. 1 is a schematic architecture diagram of a fiber to the home (FTTH) network and a fiber to the room (FTTR) network;
Fig. 2 is a schematic structural diagram of a passive optical network architecture according to an example of the present disclosure;
Fig. 3 is a schematic structural diagram of bandwidth map (BWmap) in a 10-gigabit-capable passive optical network (XG-PON) standard;
Fig. 4 is a schematic structural diagram of BWmap in a gigabit-capable passive optical network (GPON) standard;
Fig. 5 is a schematic structural diagram of an XG-PON encapsulation method (XGEM) frame in an XG-PON standard;
Fig. 6 is a schematic structural diagram of a GPON encapsulation method (GEM) frame in a GPON standard;
Fig. 7 is a schematic structural diagram of an upstream burst message in a GPON standard;
Fig. 8 is a schematic structural diagram of an upstream burst message in an XG-PON standard;
Fig. 9 is a flowchart of a data transmission method according to an example of the present disclosure;
Fig. 10 is a schematic structural diagram of a passive optical network architecture according to an example of the present disclosure;
Fig. 11 is a schematic structural diagram of a passive optical network architecture according to another example of the present disclosure; and
Fig. 12 is a schematic structural diagram of a passive optical network architecture according to yet another example of the present disclosure.

### Detailed Description of the Embodiments

The examples of the present disclosure are described in detail below with reference to the accompanying drawings and in combination with the examples.

It should be noted that the terms such as "first" and "second" in the description and claims of the present disclosure and in the above accompanying drawings are used for distinguishing between similar objects and not certainly for describing a particular order or sequence.

Fig. 2 is a schematic structural diagram of a passive optical network architecture according to an example of the present disclosure. As shown in Fig. 2, the architecture includes:
a fiber to the home (FTTH) optical line terminal 22, a main unit 24, and a sub fiber to the room (FTTR) unit 26.

In the example, each FTTH optical line terminal is connected to at least one main unit, and each main unit is connected to at least one sub FTTR unit.

In the example, the main unit is configured to establish a forwarding channel between the FTTH optical line terminal and the sub FTTR unit, and forward, at an equal delay, an upstream frame and a downstream frame between the FTTH optical line terminal and the sub FTTR unit through the forwarding channel.

In the example, the main unit may forward a downstream frame from the FTTH optical line terminal to the sub FTTR unit through the forwarding channel, and forward an upstream frame from the sub FTTR unit to the FTTH optical line terminal through the forwarding channel.

In the example, the optical line terminal (OLT) and an optical network unit (ONU) are common devices in an optical fiber access network. The OLT is generally responsible for managing and controlling the entire optical fiber access network, mainly managing and controlling the optical network unit (ONU). The ONU is responsible for access and communication of a user terminal device.

In the example, fiber to the room (FTTR) is an extension of fiber to the home (FTTH). The main unit may include an FTTH optical network unit (ONU) in the FTTH. The FTTH optical line terminal and the main unit may implement FTTH networking. Certainly, the main unit may not include the FTTH ONU, and only provide an equal-delay forwarding channel for the OLT and the sub FTTR unit. The sub FTTR unit is an FTTR ONU in the FTTR, and the sub FTTR unit and the main unit can implement FTTR networking.

In the example, the FTTH optical line terminal (OLT) may perform unified network management on the FTTH and the FTTR, and perform unified resource scheduling on the FTTH ONU and the FTTR ONU. The examples of the present disclosure may further be configured to extend the FTTR. By establishing a forwarding channel, the FTTR OLT uniformly manages downstream units of the sub FTTR unit.

In the examples of the present disclosure, by establishing a forwarding channel between the FTTH optical line terminal and the sub FTTR unit, the FTTR network and the FTTH network can be integrated to a whole. Unified scheduling management is performed on the FTTH ONU and the FTTR OUN through the FTTH OLT, such that a passive optical network in which the FTTH and the FTTR cooperate with each other is logically formed. Further, a problem that cooperative networking of FTTR and FTTH cannot be performed in the related art is solved.

In some examples, the main unit is configured to identify a target unit identity of a downstream frame, filter the downstream frame according to the target unit identity, and forward, at an equal delay, a downstream frame or broadcast downstream frame belonging to a downstream unit of the main unit to the downstream unit of the main unit. The downstream unit of the main unit is a sub FTTR unit directly connected to the main unit.

In some examples, the downstream frame includes at least one of a physical layer operations, administration and maintenance (PLOAM) message, a bandwidth map (BWmap) entry, and a passive optical network encapsulation frame.

In the example, BWmap may include a plurality of BWmap entries, and each BWmap entry corresponds to an allocation structure (8 bytes) in the BWmap.

In an illustrative example, the passive optical network encapsulation frame includes a gigabit-capable passive optical network (GPON) encapsulation method (GEM) frame, a 10-gigabit-capable passive optical network (XG-PON) encapsulation method (XGEM) frame, etc.

In some examples, the main unit is configured to identify, in a case that the downstream frame is the PLOAM message, a target unit of the PLOAM message according to a sub FTTR unit identity (SFU ID) or an optical network unit identity (ONU ID) in the PLOAM message; and/or the main unit is configured to identify, in a case that the downstream frame is the BWmap entry, a target unit of the BWmap entry according to an allocation identity (Alloc-ID) in the BWmap entry; and/or the main unit is configured to identify, in a case that the downstream frame is the passive optical network encapsulation frame, a target unit of the passive optical network encapsulation frame according to a port identity (Port ID) in the passive optical network encapsulation frame.

In some examples, the main unit is configured to convert, in a case that an original standard is different from a target standard, an original-standard message to a target-standard message. Each of the original standard and the target standard is an optical network standard. The optical network standard includes optical network standards used by the FTTH and the FTTR, such as a GPON standard, a symmetric GPON standard, an XG-PON standard, a 10-gigabit-capable symmetric passive optical network (XGS-PON) standard, a 50-gigabit-capable passive optical network (50G-PON) standard, and a passive optical network standard defined in the future. The passive optical network standards may be configured for the FTTH or the FTTR, such as a G.fin standard, a China Communication Standards Association (CCSA) FTTR standard, and other FTTR standards. In a case that the original-standard message is a downstream frame received by the main unit from the FTTH optical line terminal, the target-standard message is a downstream frame sent by the main unit to the sub FTTR unit. In a case that the original-standard message is an upstream frame received by the main unit from the sub FTTR unit, the target-standard message is an upstream frame sent by the main unit to the FTTH optical line terminal.

In some examples, the main unit is configured to convert a plurality of fields in the original-standard message to a plurality of fields in the target-standard message according to a preset standard conversion rule.

In an illustrative example, the standard conversion rule includes at least one of the following:
in a case that a first field is the same as a second field, a field value of the first field is converted to a field value of the second field, where the first field is any field in the original-standard message, and the second field is any field in the target-standard message;
in a case that the target-standard message has no field the same as the first field, the first field as a new field is added to the target-standard message;
in a case that the original-standard message has no field the same as the second field, the second field is deleted from the target-standard message; and
in a case that a length of the target-standard message is less than a length of the original-standard message, some fields in the original-standard message are deleted.

In the example, field content in the original-standard message and field content in the target-standard message are required to be determined according to a type of the upstream frame and a type of the downstream frame. The type of the upstream frame and the type of the downstream frame remain unchanged before and after standard conversion. Illustratively, the downstream frame may include a PLOAM message, a BWmap entry, and a passive optical network encapsulation frame, and the upstream frame may include a PLOAM message and a passive optical network encapsulation frame.

In some examples, the FTTH-segment standard includes at least one of a GPON standard, a symmetric GPON standard, an XG-PON standard, an XGS-PON standard, a 50G-PON standard, and a passive optical network standard defined in the future. The FTTH-segment standard is an optical network standard used between the FTTH optical line terminal and the main unit.

In some examples, the FTTR-segment standard includes at least one of a GPON standard, a symmetric GPON standard, an XG-PON standard, an XGS-PON standard, a 50G-PON standard, a passive optical network standard defined in the future, a G.fin standard, and a CCSA FTTR standard. The FTTR-segment standard is a passive optical network standard used between the main unit and the sub FTTR unit.

In the example, the FTTH-segment standard and the FTTR-segment standard may be the same or different, which is not limited in the present disclosure.

In some examples, the main unit is further configured to directly convert the downstream frame from the FTTH-segment standard to the FTTR-segment standard, or convert the downstream frame to an intermediate standard and then convert the intermediate standard to the FTTR-segment standard. The intermediate standard is a network standard other than the optical network standard.

In some examples, the main unit is further configured to directly convert the upstream frame from the FTTR-segment standard to the FTTH-segment standard, or convert the upstream frame to the intermediate standard and then convert the intermediate standard to the FTTH-segment standard.

In an illustrative example, the intermediate standard may be a network standard of a communication layer, such as Ethernet, an internet protocol (IP), and a hypertext transfer protocol (HTTP).

In some examples, the main unit is configured to buffer the downstream frame from the FTTH optical line terminal for first time and then forward the downstream frame to the sub FTTR unit, to keep a downstream forwarding delay consumed by the main unit for forwarding the downstream frame each time consistent (certainly, in a particular implementation, downstream forwarding delays in different forwarding processes may have errors, which is allowed), and buffer the upstream frame from the sub FTTR unit for second time and then forward the upstream frame to the FTTH optical line terminal, to keep an upstream forwarding delay consumed by the main unit for forwarding the upstream frame each time consistent (certainly, in a particular implementation, upstream forwarding delays in different forwarding processes may have errors, which is allowed).

In some examples, the main unit is configured to determine, in a case that an original standard is the same as a target standard, the first time and the second time according to downstream processing time and upstream processing time. Each of the original standard and the target standard is an optical network standard.

In some other examples, the main unit is configured to determine, in a case that the original standard is different from the target standard, the first time and the second time according to a rate of the original standard, a rate of the target standard, the downstream processing time, and the upstream processing time.

In an illustrative example, the XG-PON standard may be used as the FTTH-segment standard, and an upstream rate and a downstream rate are 2.5 G/10 G respectively. The GPON standard may be used as the FTTR-segment standard, and an upstream rate and a downstream rate are 1.25 G/2.5 G respectively. Optionally, the XGS-PON standard may be used as the FTTH-segment standard, and an upstream rate and a downstream rate are 10 G/10 G respectively. The symmetric GPON standard may be used as the FTTR-segment standard, and an upstream rate and a downstream rate are 2.5 G/2.5 G respectively. Optionally, the XG-PON standard may be used as the FTTH-segment standard, and an upstream rate and a downstream rate are 2.5 G/10 G respectively. The G.fin standard may be used as the FTTR-segment standard, and an upstream rate and a downstream rate are 2.5 G/2.5 G respectively.

In some examples, if the rate of the original standard is slow, data enters the main unit slowly and exits the main unit rapidly. In this case, the main unit has to buffer original standard data to an extent, to prevent the target standard from failing to obtain data. A size of an original standard frame is required to be considered for the buffer degree or size, to ensure that the target standard is prevented from failing to obtain data. If the rate of the original standard is rapid, the target standard slowly obtains data, and the data is passively buffered in the main unit. A size of the original standard frame is required to be considered for the buffer degree or size, to ensure that buffer overflow caused by not timely taking-away of data by the target standard is prevented. Thus, to determine this buffer degree or size, a maximum length of the original standard frame is required to be defined.

In an illustrative example, the downstream processing time includes at least one of:
identification time consumed for identifying the downstream frame;
filtration time consumed for filtering the downstream frame; and
conversion time consumed for performing standard conversion on the downstream frame.

In an illustrative example, the upstream processing time includes at least one of:
identification time consumed for identifying the upstream frame;
conversion time consumed for performing standard conversion on the upstream frame; and
time consumed for performing burst overhead regeneration on the upstream frame.

In an illustrative example, the identification time consumed for identifying the upstream frame may mean that when identifying the upstream burst message, the main unit consumes part of a preamble to lock a clock and searches for delimitation to acquire upstream burst content. The main unit is required to restore the upstream burst preamble and delimitation when forwarding the upstream burst content to the FTTH optical line terminal. Thus, when upstream frame buffer time (that is, the second time) is determined, consumption of this period of time is required to be considered.

In some examples, the main unit may appropriately parse an upstream burst to obtain identity information of the sub FTTR unit, or obtain the identity information of the sub FTTR unit according to a corresponding relationship between downstream management information and the upstream burst, to establish a subordinate topology relationship between the main unit and the sub FTTR unit.

In some examples, the downstream frame includes at least one of a PLOAM message, a BWmap entry, and a passive optical network encapsulation frame. The upstream frame includes at least one of a PLOAM message and a passive optical network encapsulation frame. According to different structures of the upstream frame and the downstream frame, processing time consumed before the upstream frame and the downstream frame are forwarded, and specific methods for identification, filtration, and forwarding may also have differences.

In some examples, the architecture further includes a downstream unit of the sub FTTR unit. Each sub FTTR unit is connected to at least one downstream unit of the sub FTTR unit. The sub FTTR unit is configured to establish a forwarding channel between the main unit and the downstream unit of the sub FTTR unit, forward, at an equal delay, the downstream frame from the main unit to the downstream unit of the sub FTTR unit through the forwarding channel, and forward, at an equal delay, the upstream frame from the downstream unit of the sub FTTR unit to the main unit through the forwarding channel. Through the example, the FTTR network can be further extended. Networks at a plurality of levels can be integrally networked. Unified resource scheduling and network control can be performed on optical network units at different levels in a network.

In the examples of the present disclosure, by establishing the forwarding channel between the FTTH optical line terminal and the sub FTTR unit, the FTTR network and the FTTH network can be integrated to a whole. The FTTH optical line terminal performs unified scheduling management on a plurality of main units and sub FTTR units in different FTTR networks, such that a passive optical network in which FTTH and FTTR coordinate with each other is logically formed.

The FTTH-segment standard and the FTTR standard in the example may be implemented based on different optical network standards. On this basis, according to standard differences before and after forwarding and different structures of the upstream frame and the downstream frame, processing methods for identification, filtration, and standard conversion on the upstream frame and the downstream frame by the main unit may also have differences. Specific description is performed below with the GPON standard and the XG-PON standard as instances and based on the PLOAM message, the BWmap entry, and a frame structure of the passive optical network encapsulation frame. However, the present disclosure is not limited thereto.

In Embodiment 1, a same standard is used for the FTTH segment and the FTTR segment, such as the GPON standard or the XG-PON standard. Other standards are not repeated except for the enumerated standards. An instance in which the GPON standard is used for the two segments is taken for description below.

In the example, the main unit performs filtration and equal-delay forwarding on management information and service in an downstream direction, filters out management information and service or broadcast management information and service belonging to a downstream sub FTTR unit of the main unit, and forwards the filtered-out management information and service only to its downstream sub FTTR unit (that is, the downstream unit of the main unit), and does not forward the other management information and services.

In an illustrative example, the downstream frame is the PLOAM message, and the main unit checks a sub FTTR unit identity (SFU-ID)/an optical network unit identity (ONU-ID) in the PLOAM message. If the SFU-ID/ONU-ID is a broadcast SFU-ID/ONU-ID, or the SFU-ID/ONU-ID is an identity belonging to a downstream sub FTTR unit of the main unit, the main unit forwards the PLOAM message to its downstream sub FTTR unit.

In an illustrative example, the downstream frame is the BWmap entry, and the main unit checks an allocation identity (Alloc-ID) in the BWmap entry. If the Alloc-ID is a broadcast Alloc-ID or the Alloc-ID is an identity belonging to a downstream sub FTTR unit of the main unit, the main unit forwards the BWmap entry to its downstream sub FTTR unit. Illustratively, the main unit may further locally buffer the BWmap entry in the downstream direction, to receive an upstream burst sent by the sub FTTR unit in a corresponding time slot. The receiving process is similar to a process for receiving an upstream burst sent by the ONU by the OLT in the passive optical network, and is not repeated herein.

In an illustrative example, the downstream frame is a passive optical network encapsulation frame, and the main unit checks a port identity (Port-ID) in the passive optical network encapsulation frame. If the Port-ID is a broadcast Port-ID, or the Port-ID is an identity belonging to a downstream unit of the main unit, the main unit forwards the passive optical network encapsulation frame to its downstream sub FTTR unit.

In the example, the main unit performs equal-delay forwarding on a service in an upstream direction. The main unit receives the upstream burst and transparently forwards the upstream burst to the OLT (that is, the FTTH optical line terminal). The main unit is required to consume part of a preamble when receiving the upstream burst, and receives upstream burst content by searching for delimitation. When forwarding the upstream burst content to the OLT, the main unit is required to restore the upstream burst preamble and delimitation. Thus, the main unit is required to locally buffer the upstream burst content, and through buffering, upstream forwarding delays of the main unit for all sub FTTR units and all upstream bursts are kept consistent.

In some examples, the main unit may appropriately parse an upstream burst to obtain identity information of the sub FTTR unit, or obtain the identity information of the sub FTTR unit according to a corresponding relationship between downstream management information and the upstream burst, to establish a subordinate topology relationship between the main unit and the sub FTTR unit.

In some examples, same buffer time may further be introduced in a downstream forwarding process of the main unit, such that downstream forwarding delays of the main unit for all downstream frames and all sub FTTR units are kept consistent. Further, for upstream and downstream symmetry, the upstream forwarding delay may be the same as the downstream forwarding delay, which is not limited in the present disclosure.

In Embodiment 2, different standards are used for the FTTH segment and the FTTR segment, and a rate of the FTTR segment is not greater than a rate of the FTTH segment.

In an illustrative example, the XG-PON standard is used as the FTTH segment, and an upstream rate and a downstream rate are 2.5 G/10 G respectively. The GPON standard is used as the FTTR segment, and an upstream rate and a downstream rate are 1.25 G/2.5 G respectively. Optionally, the XGS-PON standard is used as the FTTH segment, and an upstream rate and a downstream rate are 10 G/10 G respectively. The symmetric GPON standard is used as the FTTR segment, and an upstream rate and a downstream rate are 2.5 G/2.5 G respectively. Optionally, the XG-PON standard is used as the FTTH segment, and an upstream rate and a downstream rate are 2.5 G/10 G respectively. The G.fin standard is used as the FTTR segment, and an upstream rate and a downstream rate are 2.5 G/2.5 G respectively. Other standards are not repeated except for the enumerated standards. An instance in which the XG-PON standard is used for the FTTH segment and the GPON standard is used for the FTTR segment is taken for description below.

In the example, the main unit performs filtration, standard conversion, and equal-delay forwarding on management information and service in the downstream direction. The main unit filters out management information and service or broadcast management information and service belonging to a downstream unit of the main unit, and forwards the filtered-out management information and service to its downstream sub FTTR unit, and does not forward other management information and services. Before forwarding the management information and service, the main unit is further required to perform standard conversion, to convert the management information and service from the XG-PON standard of the FTTH segment to the GPON standard of the FTTR segment.

In an illustrative example, the downstream frame is a PLOAM message, and the main unit checks an SFU-ID/ONU-ID in the PLOAM message. If the SFU-ID/ONU-ID is broadcast SFU-ID/ONU-ID, or the SFU-ID/ONU-ID belongs to a downstream sub FTTR unit of the main unit, the main unit converts a PLOAM message in the XG-PON standard to a PLOAM message in the GPON standard, and forwards the PLOAM message after conversion to its downstream sub FTTR unit. It should be pointed out that a value range of the GPON SFU-ID/ONU-ID is smaller than a value range of the XG-PON SFU-ID/ONU-ID, and the OLT is required to configure the SFU-ID/ONU-ID for a sub gateway according to the value range of the GPON.

In the example, the original-standard message is a downstream PLOAM message in the XG-PON standard. For this message structure, reference can be made to standard text G.987.3 formulated by the International Telecommunication Union (ITU) Telecommunication Standardization Sector (ITU-T). The target-standard message is a downstream PLOAM message in the GPON standard. For this message structure, reference can be made to ITU-T G.984.3.

In an illustrative example, a corresponding relationship between a downstream PLOAM message in the XG-PON standard and related content and a downstream PLOAM message in the GPON standard may be shown in Table 1 below. In the example, only a conversion relationship from the downstream PLOAM message in the XG-PON standard to the downstream PLOAM message in the GPON standard is taken as an instance for description. Technical personnel may implement conversion of PLOAM messages of other different standards according to a standard conversion rule and message structures in different standards, which is not limited in the present disclosure.

**Table 1:**

| XG-PON Downstream PLOAM message content | GPON Downstream PLOAM message | Comment |
|---|---|---|
| Profile | Upstream_Overhead | |
| | Extended_Burst_Length | |
| Assign_ONU-ID | Assign_ONU-ID | |
| Ranging_Time | Ranging_Time | |
| Deactivate_ONU-ID | Deactivate_ONU-ID | |
| Disable_Serial_Number | Disable_Serial_Number | |
| Request_Registration | Request_Password | |
| Assign_Alloc-lD | Assign_Alloc-ID | |
| Key_Control | Request_Key | |
| Sleep_Allow | | The FTTR segment can add an energy-saving function and add this message. |
| | No message | Automatically generated by the main unit when no PLOAM message need to be sent |
| When Key_Index in a downstream XGEM frame header switches between 0x00 and 0x01/0x02 | Encrypted_Port-ID | |
| When Key_Index in the downstream XGEM frame header switches between 0x01 and 0x02 | Key_Switching_Time | |
| | POPUP | Can be completed by a main unit replacing an OLT |
| GEM port network CTP of OMCI | Configure Port-ID | |
| | Physical_Equipment_Error (PEE) | Can be canceled |
| | Change_Power_Level | Can be canceled |
| | PST message | Can be canceled |
| | BER Interval | Can be canceled |

In an illustrative example, in cases of first few messages in Table 1, such as the Assign_ONU-ID PLOAM message and the Ranging_Time PLOAM message, if the XG-PON PLOAM message content is consistent with the GPON PLOAM message content, only standards are converted. Message content required to be converted is converted as long as a target-standard message can perform carrying.

In an illustrative example, in a case of an Sleep_Allow PLOAM message in the XG-PON standard in Table 1, the GPON has no corresponding PLOAM message, and a corresponding energy-saving function and a corresponding Sleep_Allow message may be added to the GPON standard. Before a corresponding function is added for the GPON, the sub FTTR unit may temporarily not support the corresponding energy-saving function.

In an illustrative example, the Change_Power_Level message in the GPON standard in Table 1 has no corresponding message in the XG-PON standard, and can be directly canceled.

In the example, an XG-PON PLOAM message format is 48 bytes, and 36 bytes are used for sending message content. A GPON PLOAM message format is 13 bytes, and 10 bytes are used for sending message content. If the XG-PON PLOAM message content is consistent with the GPON PLOAM message content, only standards are converted. Message content required to be converted is converted as long as the GPON PLOAM message can perform carrying. If the GPON PLOAM message content has no corresponding field or exceeds a GPON PLOAM message content length, the message content may not be converted.

Through the examples of the present disclosure, standard conversion from an XG-PON downstream PLOAM message to a GPON downstream PLOAM message can be implemented, and integrated networking of the FTTH segment network and the FTTR segment network in different standards can be implemented.

In another illustrative example, the downstream frame is the BWmap entry, and the main unit checks an allocation identity (Alloc-ID) in the BWmap entry. If the Alloc-ID is a broadcast Alloc-ID, or the Alloc-ID belongs to a downstream unit of the main unit, the main unit converts a BWmap entry in the XG-PON standard to a BWmap entry in the GPON standard, and forwards the BWmap entry after conversion to its downstream sub FTTR unit. The main unit may locally store the BWmap entry, to receive an upstream burst sent by a corresponding sub FTTR unit. The receiving process is similar to a process for receiving, by the OLT in the passive optical network, an upstream burst sent by the ONU, and is not repeated herein. It should be pointed out that a value range of the GPON Alloc-ID is smaller than a value range of the XG-PON Alloc-ID, and the OLT is required to configure a transmission container (T-CONT) for a sub gateway according to the value range of the GPON.

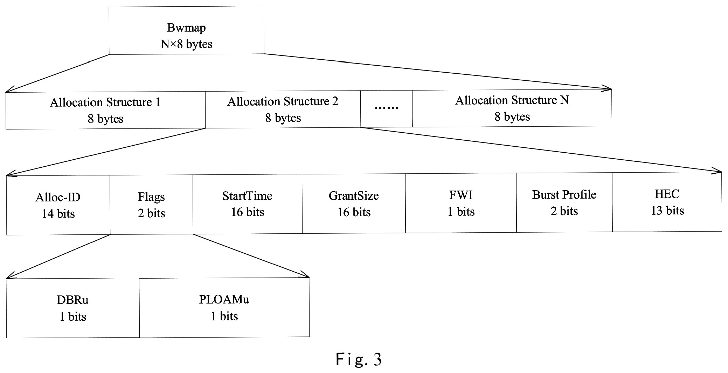

Fig. 3 is a schematic structural diagram of a BWmap in an XG-PON standard. As shown in Fig. 3, the bandwidth map (BWmap) in the XG-PON standard is composed of a plurality of entries or allocation structures. Each allocation structure includes fields as follows:
an allocation identity (Alloc-ID), start time (StartTime), a grant size (GrantSize), a forced wake-up indication (FWI), a burst profile, header error control (HEC), a physical layer operations, administration and maintenance upstream (PLOAMu) indication, and a dynamic bandwidth reporting upstream (DBRu) indication.

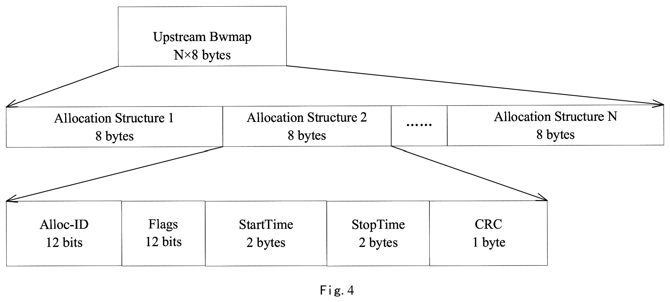

Fig. 4 is a schematic structural diagram of a BWmap in a GPON standard. As shown in Fig. 4, the BWmap in the GPON standard is composed of a plurality of entries or allocation structures. Each allocation structure includes fields as follows:
an allocation identity (Alloc-ID), flags, StartTime, stop time (StopTime), and a cyclic redundancy check (CRC).

In an illustrative example, a field corresponding relationship between the XG-PON BWmap entry and the GPON BWmap entry may be shown in Table 2 below. In the example, only a conversion relationship from the BWmap entry in the XG-PON standard to the BWmap entry in the GPON standard is taken as an instance for description. Technical personnel may implement conversion of BWmap entries of other different standards according to a standard conversion rule and message structures in different standards, which is not limited in the present disclosure.

**Table 2:**

| XG-PON BWmap entry fields | GPON BWmap entry fields | Comment |
|---|---|---|
| Alloc-ID | Alloc-ID | A value range of a GPON Alloc-ID is smaller than a value range of an XG-PON Alloc-ID, and an OLT is required to configure an Alloc-ID for a sub gateway according to a value range of GPON. |
| StartTime | StartTime | |
| GrantSize | StopTime | StopTime can be computed from StartTime and a GrantSize. |
| PLOAMu | Send PLOAMu | |
| DBRu | Send DBRu (mode) | |
| FWI | | A GPON can add this function. |
| Burst Profile | Use FEC | |
| | Upstream_Overhead PLOAM message | |
| | Extended_Burst_Length PLOAM message | |

In an illustrative example, StopTime in the GPON BWmap entry in the target standard in Table 2 may be computed from StartTime and a GrantSize, and the XG-PON BWmap entry in the original standard has fields of StartTime and a GrantSize. Then, in a standard conversion process, field content in the original-standard entry may be computed to obtain corresponding field content in the target-standard entry.

In an illustrative example, the GPON BWmap entry in the target standard in Table 2 has no message content corresponding to a FWI field in the entry in the original standard, and this field may be added to the GPON BWmap field or a forced wake-up indication (FWI) function may be directly canceled.

Through the examples of the present disclosure, standard conversion from the XG-PON BWmap entry to the GPON BWmap entry can be implemented, and integrated networking of the FTTH-segment network and the FTTR-segment network in different standards can be implemented.

In another illustrative example, the downstream frame is a passive optical network encapsulation frame, and the main unit checks a port identity (Port-ID) in the passive optical network encapsulation frame. If the Port-ID is a broadcast Port-ID, or the Port-ID is an identity belonging to a downstream unit of the main unit, the main unit converts an XGEM frame in the XG-PON standard to a GEM frame in the GPON standard, and forwards the GEM frame after conversion to its downstream sub FTTR unit. It should be pointed out that a value range of the GPON Port-ID is smaller than a value range of the XG-PON Port-ID, and the OLT is required to configure the GEM Port for a sub gateway according to the value range of the GPON.

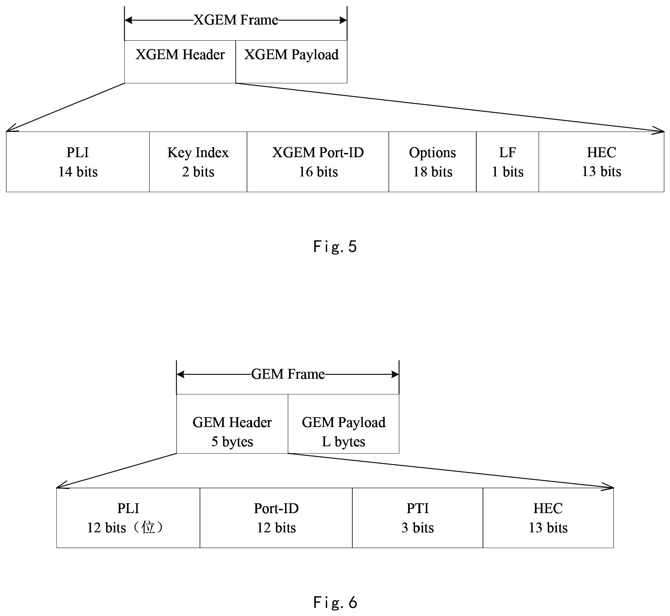

Fig. 5 is a schematic structural diagram of an XGEM frame in an XG-PON standard. As shown in Fig. 5, a message header of the XGEM frame includes fields as follows:
a payload length indicator (PLI), a key index, an XGEM port identity (Port-ID), options, a loss of frame (LF), and header error control (HEC).

Fig. 6 is a schematic structural diagram of a GEM frame in a GPON standard. As shown in Fig. 6, a message header of the GEM frame includes fields as follows:
a payload length indicator (PLI), a port identity (Port-ID), a packet type identifier (PTI), and header error control (HEC).

In an illustrative example, a corresponding relationship between a field and related content of the XGEM frame and a field and related content of the GEM frame may be shown in Table 3 below. In the example, only a conversion relationship from the XGEM frame in the XG-PON standard to the GEM frame in the GPON standard is taken as an instance for description. Technical personnel may implement conversion of encapsulation messages of other different standards according to a standard conversion rule and message structures in different standards, which is not limited in the present disclosure.

**Table 3:**

| XG-PON XGEM frame fields | GPON GEM frame fields and related content | Comment |
|---|---|---|
| PLI | PLI | |
| Key_Index | Encrypt_Port-ID PLOAM message | Key_Index is 0x00, which denotes no encryption |
| | Key_Switching_Time PLOAM message | Key_Index is 0x01/0x02, which denotes encryption. Switching between 0x01 and 0x02 denotes key switching. |
| XGEM Port-ID | Port-ID | |
| LF | PTI | |

In an illustrative example, an LF field of the XGEM frame in Table 3 may be converted to a PTI field of the GEM frame. It should be pointed out that the Key_Index of the XGEM frame is configured to indicate an encryption state of the XGEM frame and a used key index. An Encrypt_Port-ID PLOAM message converted to be in the GPON standard is configured to switch the encryption state of the GEM frame, and a Key_Switching_Time PLOAM message is configured to switch the key index.

Through the examples of the present disclosure, standard conversion from the XG-PON downstream XGEM frame to the GPON downstream GEM frame can be implemented, and integrated networking of the FTTH segment network and the FTTR segment network in different standards can be implemented.

In the example, since the rate of the XG-PON standard is greater than the rate of the GPON standard, the main unit is further required to buffer the downstream frame when performing downstream equal-delay forwarding. To reduce a buffer number and prevent buffer overflow, the FTTH optical line terminal performs equalization and interpolation on downstream traffic, such that services to downstream units of the main unit are evenly distributed as much as possible.

In the example, the main unit performs standard conversion and equal-delay forwarding on a service in the upstream direction. The main unit receives an upstream burst, converts the upstream burst in the GPON standard to the upstream burst in the XG-PON standard, and forwards the upstream burst in the XG-PON standard to the FTTH optical line terminal (OLT).

In an illustrative example, a corresponding relationship between the upstream PLOAM message in the GPON standard and the upstream PLOAM message in the XG-PON standard is shown in Table 4.

**Table 4:**

| GPON upstream PLOAM message | XG-PON upstream PLOAM message | Comment |
|---|---|---|
| Serial_Number_ONU | Serial_Number_ONU | |
| Password | Registration | |
| Encryption key | Key_Report | |
| Acknowledge | Acknowledgement | |
| | Sleep_Request | An FTTR segment can add an energy-saving function and a corresponding message. |
| Dying_Gasp | Can correspond a Dying Gasp indication bit in an upstream burst | |
| No message | | A corresponding message may not be sent. |
| Physical_Equipment_Error (PEE) | | Can be canceled |
| PST message | | Can be canceled |
| Remote error indication (REI) | | Can be canceled |

Through the examples of the present disclosure, standard conversion from the upstream PLOAM message in the GPON standard to the upstream PLOAM message in the XG-PON standard can be implemented, and integrated networking of the FTTH segment network and the FTTR segment network in different standards can be implemented.

In the example, when receiving an upstream burst, the main unit is required to consume part of a preamble to lock a clock, searches for delimitation, and obtains upstream burst content to identify which sub FTTR unit the upstream burst message comes from. When the main unit forwards the upstream burst to the OLT, the upstream burst preamble and delimitation are required to be restored. Thus, the main unit is required to locally buffer the upstream burst.

In the example, buffer time of upstream forwarding is required to be kept consistent for all sub FTTR units and all upstream bursts, such that upstream forwarding delays are kept consistent. Further, for upstream and downstream symmetry, it can be considered that same buffer time is introduced in downstream forwarding of the main unit. Certainly, delays caused by identification, filtration, and standard conversion in the downstream direction should be comprehensively considered. The main unit may parse the upstream burst to obtain identity information of the sub FTTR unit, or obtain the identity information of the sub FTTR unit according to a corresponding relationship between downstream management information and the upstream burst, to establish a topology relationship between the main unit and the sub FTTR unit.

In Embodiment 3, different standards are used for the FTTH segment and the FTTR segment, and a rate of the FTTH segment is not greater than a rate of the FTTR segment.

In an illustrative example, the symmetric GPON standard is used for the FTTH segment, and an upstream rate and a downstream rate are 2.5 G/2.5 G respectively. The XG-PON standard is used for the FTTR segment, and an upstream rate and a downstream rate are 2.5 G/10 G respectively. Other standards are not repeated except for the enumerated standards.

In the example, in the downstream direction, the main unit performs identification, filtration, and standard conversion, and then performs equal-delay forwarding on downstream management information and service. The main unit filters out management information and service or broadcast management information and service belonging to a downstream sub FTTR unit of the main unit, forwards the management information and service to its downstream sub FTTR unit of the main unit, does not forward other management information and services, and converts the management information and service from the GPON standard to the XG-PON standard before forwarding.

In an illustrative example, the downstream frame is the PLOAM message, and the main unit checks a SFU-ID/ONU-ID in the PLOAM message. If the SFU-ID/ONU-ID is a broadcast SFU-ID/ONU-ID, or the SFU-ID/ONU-ID belongs to a downstream sub FTTR unit of the main unit, the main unit forwards the PLOAM message. The downstream frame is converted from a PLOAM message in the GPON standard to a PLOAM message in the XG-PON standard. For a conversion relationship, reference can be made to conversion from right to left in Table 1.

In an illustrative example, the downstream frame is the BWmap entry, and the main unit checks an Alloc-ID in the BWmap entry. If the Alloc-ID is a broadcast Alloc-ID, or the Alloc-ID is a downstream sub FTTR unit of the main unit, the main unit forwards the BWmap entry. The main unit may locally store the BWmap entry, to receive an upstream burst sent by the sub FTTR unit. The downstream frame is converted from the BWmap entry in the GPON standard to the BWmap entry in the XG-PON standard. For a conversion relationship, reference can be made to conversion from right to left in Table 2.

In an illustrative example, the downstream frame is the GEM frame, and the main unit checks a Port-ID in the GEM frame. If the Port-ID is a broadcast Port-ID, or the Port-ID is a downstream sub FTTR unit of the main unit, the main unit forwards the GEM frame. The downstream frame is converted from a GEM frame in the GPON standard to a GEM frame in the XG-PON standard (that is, an XGEM frame). For a conversion relationship, reference can be made to conversion from right to left in Table 3. In addition, since a rate of the symmetric GPON standard is slower than a rate of the XG-PON standard, downstream forwarding is required to be buffered to an extent. Buffer time is required to keep downstream forwarding delays consistent.

In the example, in the upstream direction, the main unit performs standard conversion and equal-delay forwarding on an upstream service, receives an upstream burst, converts an upstream burst in the XG-PON standard to an upstream burst in the GPON standard, and forwards the upstream burst to the OLT. For a conversion relationship, reference can be made to conversion of an upstream PLOAM message from right to left in Table 4.

In the example, when receiving the upstream burst, the main unit is required to consume part of a preamble to lock a clock, searches for delimitation, and obtains upstream burst content. When forwarding the upstream burst content to the OLT, the main unit is required to restore the upstream burst preamble and delimitation. Thus, the main unit is required to locally buffer the upstream burst for a period of time. In addition, since a rate of the XG-PON standard of the FTTR segment is relatively high and the rate of the GPON of the FTTH segment is relatively low, it is required to buffer and then forward the upstream burst. This buffer time is required to be kept consistent for all sub FTTR units and all upstream bursts.

In some examples, for upstream and downstream symmetry, delays caused by downstream conversion and buffering may be comprehensively considered. Buffer time is introduced in downstream forwarding of the main unit, such that an upstream forwarding delay is the same as a downstream forwarding delay.

In some examples, the main unit may further parse the upstream burst to obtain identity information of the sub FTTR unit, or obtain the identity information of the sub FTTR unit according to a corresponding relationship between downstream management information and the upstream burst, to establish a subordinate topology relationship between the main unit and the sub FTTR unit.

Through the examples of the present disclosure, in a case that different standards are used for the FTTR segment and the FTTH segment, the FTTR network and the FTTH network can be integrated to a whole. Low-delay service transmission is implemented through equal-delay forwarding of an upstream frame and a downstream frame between the FTTR-segment standard and the FTTH-segment standard, to logically form a passive optical network in which the FTTH and the FTTR cooperate with each other.

In an illustrative example, in the downstream direction, with a Profile message in the downstream PLOAM message in the XG-PON standard as an instance, a conversion process and conversion rule of converting the Profile message to an Upstream_Overhead message and an Extended_Burst_Length message in a downstream PLOAM message in the GPON standard are described in detail.

In the example, composition and structure of the Profile message are shown in Table 5, composition and structure of the Upstream_Overhead message are shown in Table 6, and composition and structure of the Extended_Burst_Length message are shown in Table 7. A corresponding relationship of standard conversion from the Profile message to the Upstream_Overhead message and the Extended_Burst_Length message is shown in Table 8.

**Table 5:**

| Profile message | | |
|---|---|---|
| Octet | Content | Description |
| 1-2 | ONU-ID | Directed message to one ONU or broadcast message to all ONUs. As a broadcast to all ONUs, ONU-ID = 0x03FF. |
| 3 | 0x01 | Message type ID |
| 4 | SeqNo | Unicast or broadcast PLOAM sequence number, as appropriate. |
| 5 | VVVV 00PP | VVVV - Four-bit profile version. If the content of the profile changes, the OLT should ensure that the version also changes, so that the ONU can detect updates solely on the basis of the version field. |
| | | PP - Two-bit profile index. |
| 6 | 0000 000F | FEC indication. F = 1: FEC on, F = 0: FEC off. |
| 7 | 0000 DDDD | DDDD - Delimiter length in octets; four-bit integer, range 0..8. |
| 8-15 | Delimiter | Aligned with the most significant end of the field; padded with 0x00; padding treated as "don't care" by the receiver. |
| 16 | 0000 LLLL | LLLL - Preamble length in octets; four-bit integer; range 1-8. |
| 17 | 000R RRRR | RRRRR - Five-bit preamble repeat count, range 0-31. The value 0 specifies that the preamble is not transmitted at all. |
| 18-25 | Preamble | Preamble pattern, aligned with the most significant end of the field; padded with 0x00; padding treated as "don't care" by the receiver. |
| 26-33 | PON-TAG | An 8-byte static identity of the OLT PON port that is chosen by the operator and is used to bind the master session key (MSK) to the context of the security association (see clause 15.3.3). It is recommended that PON-TAG be unique within at least the operator's domain and fixed for the lifetime of the system. For example, it may be obtained as a concatenation of 4-byte OLT Vendor-ID and a 4-byte VSSN of the PON port. |
| 34-40 | Padding | Set to 0x00 by the transmitter; treated as "don't care" by the receiver. |
| 41-48 | MIC | Message integrity check |

**Table 6**

| Upstream_Overhead message | | |
|---|---|---|
| Octet | Content | Description |
| 1 | 11111111 | Broadcast messages to all ONUs |
| 2 | 00000001 | Message identification |
| 3 | 99999999 | gggggggg = Number of guard bits. |
| 4 | xxxxxxxx | xxxxxxxx = Number of type 1 preamble bits. Type 1 preamble bits contain the 'all-ones' pattern. This may be set to zero. |
| 5 | yyyyyyyy | yyyyyyyy = Number of type 2 preamble bits. Type 2 preamble bits contain the 'all-zeroes' pattern. This may be set to zero. |
| 6 | cccccccc | cccccccc = Pattern to be used for type 3 preamble bits |
| 7 | bbbbbbbb | Data to be programmed in delimiter byte 1 |
| 8 | bbbbbbbb | Data to be programmed in delimiter byte 2 |
| 9 | bbbbbbbb | Data to be programmed in delimiter byte 3 |
| | | xx = Reserved: |
| | | e = Status of delay pre-equalization mechanism: "0" = No pre-assigned delay, "1" = Use pre-assigned delay given below. |
| | | m = Status of SN_Mask mechanism: "0" = SN_Mask disabled, "1" = SN_Mask enabled. |
| | | ss = Max number of extra SN-transmissions sent in response to a single SN-request. For example, ss = 10 means an ONU will send 3 SN-transmissions when responding to a SN-request. |
| 10 | xxemsspp | Default ONU transmit power level mode: |
| | | pp = "00" - Mode 0: Normal. |
| | | pp = "01" - Mode 1: Normal - 3 dB. |
| | | pp = "10" - Mode 2: Normal - 6 dB. |
| | | pp = "11" - Reserved. |
| 11 | dddddddd | MSB of pre-assigned delay (32 byte units). |
| 12 | dddddddd | LSB of pre-assigned delay (32 byte units). |

**Table 7**

| Extended_Burst_Length message | | |
|---|---|---|
| Octet | Content | Description |
| 1 | 11111111 | Broadcast message to all ONUs. |
| 2 | 00010100 | Message identification |
| 3 | pppppppp | pppppppp = Number of type 3 preamble bytes to be used while the ONU remains in the 'pre-ranged' states: Serial_Number state (O3) and Ranging state (O4). Each byte of the type 3 preamble contains the pattern specified in octet 6 of the Upstream_Overhead message. |
| 4 | rrrrrrrr | rrrrrrrr = Number of type 3 preamble bytes to be used after the ONU enters the Operation state (O5). Each byte of the type 3 preamble contains the pattern specified in Octet 6 of the Upstream_Overhead message |
| 5-12 | Unspecified | Reserved for future study. |

**Table 8:**

| Profile content | Upstream_Overhead content | Extended_Burst_Length content |
|---|---|---|
| ONU-ID | unicast ONU-ID is not required to be converted, and broadcast ONU-ID=0x3FF is converted to 255. | unicast ONU-ID is not required to be converted, and broadcast ONU-ID=0x3FF is converted to 255. |
| 0x01 | 0x01 | 0x14 |
| SeqNo | - | - |
| VVVV 00PP | - | - |
| 0000 000F | | |
| 0000 DDDD | 7, 8 and 9 bytes | - |
| Delimiter | 3 pieces of bbbbbbbb | |
| 0000 LLLL | 6 bytes | - |
| Preamble | cccccccc | |
| 000R RRRR | - | 3 or 4 bytes |
| | | pppppppp or rrrrrrrr |
| PON-TAG | - | - |
| | 3 bytes | |
| | 99999999 | |
| | This part is not required, is a reserved value for an OLT, and can be filled in with 0. | |
| | 4 and 5 bytes are filled in with 0. | |
| | 10 bytes filled in with 0 by default | |
| | 11 and 12 bytes filled in with 0 by default | |

In the example, according to the conversion relationship in Table 8, standard conversion may be performed on the Profile message in the downstream PLOAM message in the XG-PON standard, such that an Upstream_Overhead message and an Extended_Burst_Length message in the downstream PLOAM message in the GPON standard are obtained. However, the present disclosure is not limited thereto, and other downstream PLOAM messages, GEM frames, or BWmap entries may also be converted according to respective message content and standard conversion rules.

In an illustrative example, in the upstream direction, a conversion process and conversion rule from the GPON standard to the XG-PON standard are described in detail with a Serial_Number_ONU message in an upstream PLOAM message as an instance.

In the example, message content of the Serial_Number_ONU message in the XG-PON standard is shown in Table 9, and message content of the Serial_Number_ONU message in the GPON standard is shown in Table 10. A corresponding relationship of standard conversion from the Serial_Number_ONU message in the GPON standard to the Serial_Number_ONU message in the XG-PON standard is shown in Table 11.

**Table 9:**

| XG-PON Serial_Number_ONU message | | |
|---|---|---|
| Octet | Content | Description |
| 1-2 | 0x03FF | Unassigned ONU-ID. |
| 3 | 0x01 | Message type ID |
| 4 | 0x00 | Serial number |
| 5-8 | Vendor_ID | The code set for the Vendor_ID is specified in [ATIS-0300220]. The four characters are mapped into the 4-byte field by taking each ASCII/ANSI character code and concatenating them. |
| | | Example: Vendor_ID = ABCD → Byte 5 = 0x41, Byte 6 = 0x42, Byte 7 = 0x43, Byte 8 = 0x44. |
| 9-12 | VSSN | Vendor-specific serial number. |
| 13-16 | Random_delay | The random delay used by the ONU when sending this message, measured in bit times with respect to the nominal upstream line rate of 2.48832 Gbit/s. |
| 17-40 | Padding | Set to 0x00 by the transmitter; treated as "don't care" by the receiver. |
| 41-48 | MIC | Message integrity check computed using the default PLOAM integrity key |

**Table 10:**

| GPON Serial_Number_ONU message | | |
|---|---|---|
| Octet | Content | Description |
| 1 | 11111111 | No ONU-ID was assigned yet. |
| | ONU-ID | If the ONU-ID was assigned to this ONU. |
| 2 | 00000001 | Message identification |
| 3 | VID1 | Vendor_ID byte 1 |
| 4 | VID2 | Vendor_ID byte 2 |
| 5 | VID3 | Vendor_ID byte 3 |
| 6 | VID4 | Vendor_ID byte 4 |
| 7 | VSSN1 | Vendor-specific serial number byte 1. |
| 8 | VSSN2 | Vendor-specific serial number byte 2. |
| 9 | VSSN3 | Vendor-specific serial number byte 3. |
| 10 | VSSN4 | Vendor-specific serial number byte 4. |
| 11 | RRRRRRRR | The random delay (MSB) (In 32-byte units) used by the ONU when sending this message. |
| | | RRRR = random delay (LSB) (in 32-byte units) used by the ONU when sending this message. |
| | | A = 0; this bit shall not be evaluated by the OLT. |
| 12 | RRRRAGTT | G = GEM transport is supported by this ONU (G = 1: supported). |
| | | TT = ONU TX Power Level Mode used by the ONU. |
| | | TT = 00: Low power. |
| | | TT = 01: Medium power. |
| | | TT = 10: High power. |
| | | TT = 11: Reserved. |

**Table 11:**

| XG-PON Serial_Number_ONU message content | GPON Serial_Number_ONU message content |
|---|---|
| 0x03FF | 255 |
| 0x01 | 0x01 |
| 0x00 | - |
| Vendor_ID | 3-6 bytes |
| VSSN | 7-10 bytes |
| Random_delay | RRRRRRRR of 11 bytes and RRRR of 12 bytes |
| - | AGTT of 12 bytes |

In the example, according to the conversion relationship in Table 9, standard conversion may be performed on the Serial_Number_ONU message in the upstream PLOAM message in the GPON standard, such that the Serial_Number_ONU message in the upstream PLOAM message in the XG-PON standard is obtained. However,the present disclosure is not limited thereto, and other upstream PLOAM messages may also be converted according to respective message content and standard conversion rules.

Through the examples of the present disclosure, standard conversion can be performed on an upstream frame and a downstream frame in different standards, low-delay service forwarding across the FTTH network and the FTTR network can be implemented, and overall network performance can be improved. During integrated networking of FTTH and FTTR, restrictions of network standards can be ignored, and a networking manner is more flexible.

In some examples of the present disclosure, to implement equal-delay forwarding, the upstream frame and the downstream frame are required to be buffered for a period of time. The buffer time is required to be set by comprehensively considering influences of message identification, standard conversion, and rates of different standards. In the upstream direction, when receiving an upstream burst, the main unit is required to consume part of a preamble to lock a clock, searches for delimitation, and obtains upstream burst content to identify a sub FTTR unit to which an upstream frame belongs. When the main unit forwards the upstream burst to the OLT, it is required to restore the upstream burst preamble and delimitation. Thus, the main unit is required to locally buffer the upstream burst for a period of time.

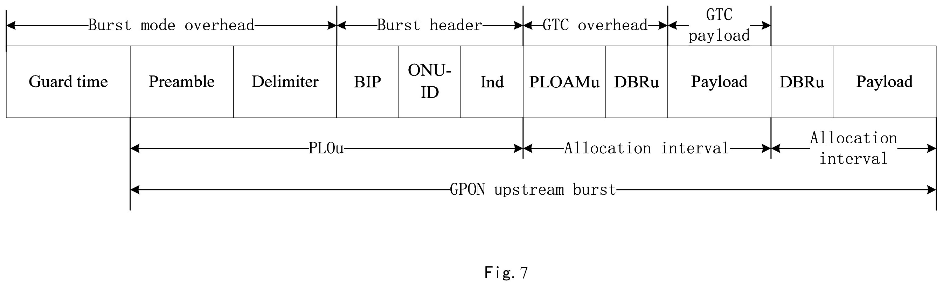

Fig. 7 is a schematic structural diagram of an upstream burst message in a GPON standard. As shown in Fig. 7, according to ITU-T G.984.3, the upstream burst message in the GPON standard is composed of structures as follows:
a burstmode overhead, a burst header, a G-PON transmission convergence (GTC) overhead, and a GTC payload.

The burstmode overhead includes guard time, a preamble, and a delimiter.

The burst header includes a bit interleaved parity (BIP), an optical network unit identity (ONU-ID), and an indication (Ind).

The GTC overhead includes a physical layer operations, administration, and maintenance upstream (PLOAMu) and a dynamic bandwidth reporting upstream (DBRu).

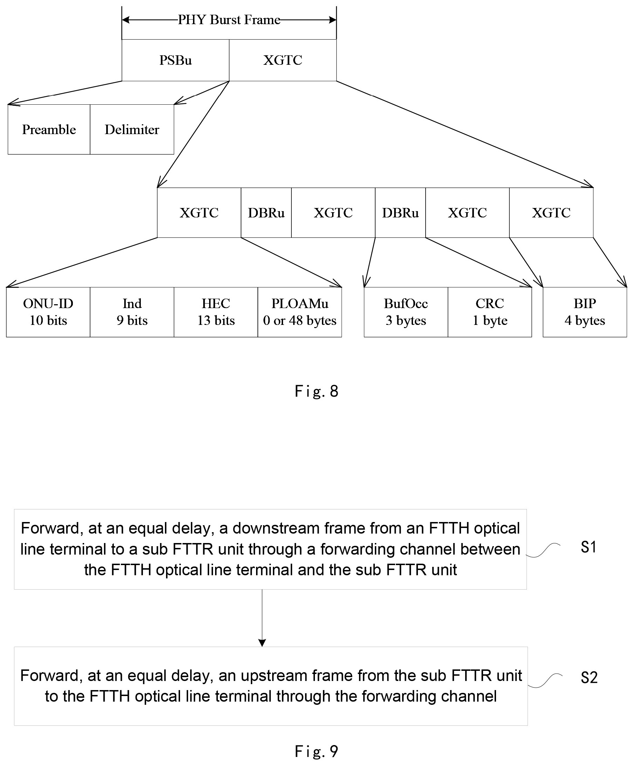

Fig. 8 is a schematic structural diagram of an upstream burst message in an XG-PON standard. As shown in Fig. 8, according to ITU-T G.987.3, the upstream burst message (such as a physical layer burst) in the XG-PON standard is composed of structures as follows:
an upstream physical synchronization block upstream (PSBu) and a physical layer burst payload, where the physical layer burst payload is denoted by an upstream XG-PON transmission convergence (XGTC).

The PSBu includes a preamble and a delimiter.

The XGTC includes an XGTC header, a DBRu, an XGTC payload, and an XGTC tail.

The XGTC header includes an ONU-ID, an Ind, an HEC, and a PLOAMu.

The XGTC tail includes a BIP.

In the example, a conversion relationship between the XG-PON upstream burst and the GPON upstream burst is shown in Table 12. In addition to the conversion of these fields, other fields such as a preamble, delimitation, a BIP, and an HEC are generated according to methods specified in the XG-PON standard and the GPON standard. If the upstream burst further involve FEC check, the FEC check is generated according to methods specified in the XG-PON standard and the GPON standard.

**Table 12:**

| XG-PON | GPON | Conversion relationship |
|---|---|---|
| upstream burst | upstream burst | |
| ONU-ID | ONU-ID | No conversion is required. |
| Ind | Ind | Converted according to a standard format |
| PLOAMu | PLOAMu | Converted according to a PLOAM message |
| DBRu | DBRu | Converted according to a standard format |
| XGTC payload | GTC payload | Converted according to a relationship between an XGEM frame and a GEM frame |

In an illustrative example, for instance, in the upstream frame forwarding process in Embodiment 2 mentioned above (the XG-PON standard is used for the FTTH segment, and the GPON standard is used for the FTTR segment), the main unit restores the locked clock by consuming a preamble of a GPON upstream burst, then searches for a delimiter, and forwards message content after conversion to the FTTH optical line terminal after performing standard conversion from a BIP domain (see the above table), and is required to send the preamble and the delimiter in the XG-PON standard before forwarding.

In another illustrative example, for instance, in the upstream frame forwarding process in Embodiment 3 mentioned above (the symmetric GPON standard is used for the FTTH segment, and the XG-PON standard is used for the FTTR segment), the main unit restores the locked clock by consuming a preamble of an XG-PON upstream burst, then searches for a delimiter, and forwards message content after conversion to the FTTH optical line terminal after performing standard conversion from an ONU-ID domain (see the above table), and is required to send the preamble and the delimiter in the GPON standard before forwarding.

In the example, in addition to conversion time consumed for performing standard conversion on the upstream frame, preamble consumption time, preamble restoration time, delimitation search time, and delimitation restoration time of the upstream frame are required to be considered. Thus, upstream forwarding time of the sub FTTR unit for all upstream frames is consistent. A source of an upstream frame can be identified by consuming a preamble to lock a clock, searching for delimitation, and obtaining upstream burst content, such that this time can alternatively be referred to as time consumed for identifying the upstream frame and regenerating a burst overhead.

Through the examples of the present disclosure, the upstream frame and the downstream frame can be buffered separately according to upstream processing time, downstream processing time, a rate of an FTTH segment, and a rate of an FTTR segment, to implement equal-delay forwarding of the upstream frame and the downstream frame. Further, unified management of different sub FTTR units by the FTTH optical line terminal is implemented. A passive optical network in which FTTH and FTTR cooperate with each other is logically formed.

The examples of the present disclosure provide a passive optical network architecture for integrating an FTTH network and an FTTR network. The FTTH network and the FTTR network are unified to one network, such that unified resource scheduling, management, and operation of the FTTH and the FTTR are implemented.

In the examples of the present disclosure, the main unit can establish a communication channel for the sub FTTR unit and the FTTH OLT. The main unit can identify, store, filter, convert, and forward an upstream service and a downstream service. In a conversion process, the main unit can convert a function in an original standard to a function in a target standard. If the target standard does not support the function in the original standard, the main unit may not convert this function. Alternatively, a corresponding function is added in the target standard, and corresponding function conversion is performed by the main unit.

In the examples of the present disclosure, mutual forwarding is performed between the FTTH segment and the FTTR segment by a main unit. If rates of the two segments are different, the main unit is required to perform buffering and then forwarding. If standards of the two segments are different, buffering, conversion, and then forwarding are required to be performed. In addition, the main unit is required to consume part of a preamble and perform delimitation to identify an upstream burst in a process of forwarding an upstream burst. The main unit is required to forward the upstream burst after restoring the preamble and delimitation of the upstream burst. Thus, buffering is further required. To not affect a ranging result of each sub FTTR unit, after considering the above factors and other necessary factors, upstream forwarding time and downstream forwarding time in a forwarding process of each sub FTTR unit in the main unit should be kept consistent and stable, to make upstream transmission time and downstream transmission time consistent.

In the examples of the present disclosure, the main unit establishes an equal-delay forwarding channel for the FTTH OLT and the sub FTTR unit such that logical integrated networking of the FTTH and the FTTR can be implemented. The sub FTTR unit and the main unit logically belong to ONUs of the OLT. The FTTR is an extension of the FTTH. The FTTH OLT can uniformly schedule resources for the sub FTTR unit. Low-delay service transmission can be implemented. Moreover, the FTTH OLT can directly manage the sub FTTR unit. The main unit and the sub FTTR unit can autonomously construct a home internal network. By modifying or replacing a home gateway device of the FTTH as the main unit and deploying an indoor optical distribution network of the FTTR, the sub FTTR unit can be directly accessed. Then, configuration and service of an SFU can be enabled on an FTTH management platform. According to a service requirement, the sub FTTR unit can also establish an equal-delay forwarding channel. Thus, the downstream units of the sub FTTR unit become extensions of the FTTR network and the FTTH network, and logically become one network with the FTTH network and the FTTR network.

In the examples of the present disclosure, not only sub FTTR units of the same standard can directly access the main unit, and also sub FTTR units in different standards can directly and conveniently access the main unit. Thus, flexibility of networking is better.

According to another example of the present disclosure, a data transmission method is further provided. The method is applied to a passive optical network architecture. The architecture includes an FTTH optical line terminal, a main unit, and a sub FTTR unit. Each FTTH optical line terminal is connected to at least one main unit. Each main unit is connected to at least one sub FTTR unit.

Fig. 9 is a flowchart of a data transmission method according to an example of the present disclosure. As shown in Fig. 9, the flowchart includes steps as follows:
Step S1,a downstream frame from an FTTH optical line terminal to a sub FTTR unit is forwarded at an equal delay through a forwarding channel between the FTTH optical line terminal and the sub FTTR unit; and
step S2, the upstream frame from the sub FTTR unit is forwarded to the FTTH optical line terminal at an equal delay through the forwarding channel, where the forwarding channel is established by the main unit.

Through the examples of the present disclosure, equal-delay forwarding of the upstream frame and the downstream frame can be implemented between the FTTR and the FTTH. Integrated networking of the FTTR and the FTTH is implemented. A passive optical network in which the FTTH and the FTTR cooperate with each other is logically formed.

According to yet another example of the present disclosure, a main unit is provided. The main unit is applied to a passive optical network architecture. The architecture includes an FTTH optical line terminal, a main unit, and a sub FTTR unit. Each FTTH optical line terminal is connected to at least one main unit. Each main unit is connected to at least one sub FTTR unit. The main unit is configured to establish a forwarding channel between the FTTH optical line terminal and the sub FTTR unit, and forward, at an equal delay, an upstream frame and a downstream frame between the FTTH optical line terminal and the sub FTTR unit through the forwarding channel.

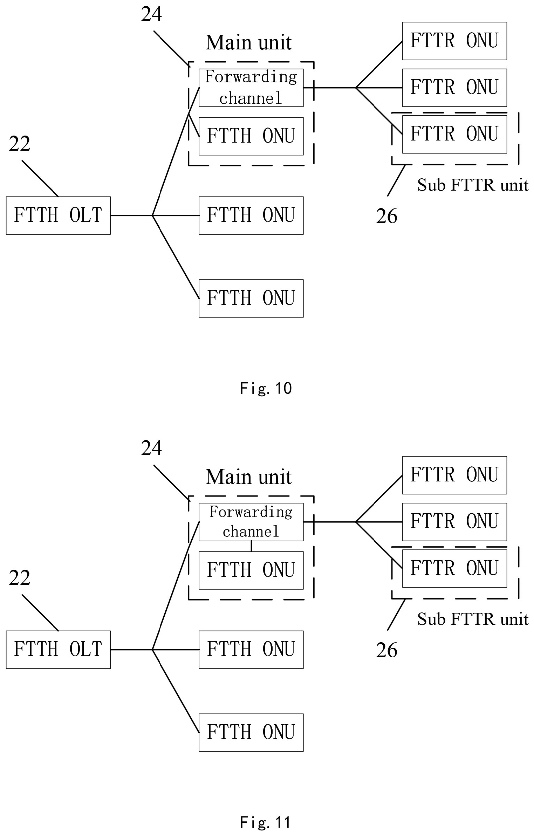

Fig. 10 is a schematic structural diagram of a passive optical network architecture according to an example of the present disclosure. As shown in Fig. 10, a main unit includes a forwarding channel and an FTTH optical network unit (ONU).

In the example, the FTTH ONU in the main unit and the forwarding channel are connected to the FTTH OLT, to implement respective functions independently.

In the example, the forwarding channel is configured to connect the FTTR optical network unit and the FTTH optical line terminal, and is responsible for identification, filtration, standard conversion, and equal-delay forwarding of the upstream frame and the downstream frame between the FTTR ONU and the FTTH OLT.

Fig. 11 is a schematic structural diagram of a passive optical network architecture according to another example of the present disclosure. As shown in Fig. 11, a main unit includes a forwarding channel and an FTTH optical network unit (ONU).

In the example, the FTTH ONU in the main unit is connected to the FTTH OLT through a forwarding channel, and the sub FTTR unit is also connected to the FTTH OLT through the forwarding channel.

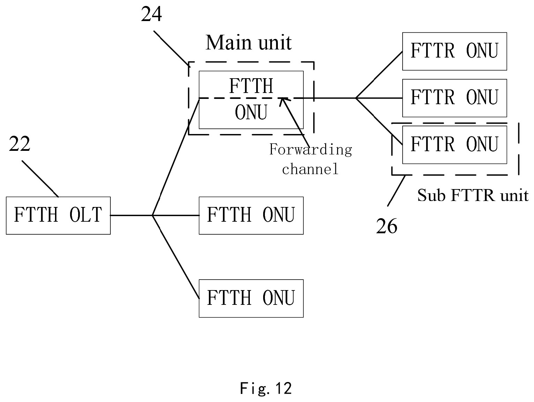

Fig. 12 is a schematic structural diagram of a passive optical network architecture according to yet another example of the present disclosure. As shown in Fig. 12, a main unit includes a forwarding channel and an FTTH optical network unit (ONU).

In the example, the forwarding channel and the FTTH ONU form a whole, and the function of the forwarding channel can be implemented by the FTTH ONU.

Through the examples of the present disclosure, integrated networking of the FTTH and the FTTR can be implemented. Unified resource configuration and network control are performed on the FTTH ONU and the FTTR ONU by the FTTH OLT. Thus, a passive optical network in which the FTTH and FTTR the cooperate with each other is logically formed.

For particular instances in the example, reference can be made to the instances described in the above examples and illustrative embodiments, which are not repeated in the example.

Obviously, a person skilled in the art should understand that all the above modules or steps in the present disclosure can be implemented by a general-purpose computation apparatus, and can be centralized on a single computation apparatus or distributed on a network composed of a plurality of computation apparatuses. The modules or steps can be implemented by program codes executable by the computation apparatus such that the modules or steps can be stored in a storage apparatus to be executed by the computation apparatus. In some situations, the steps shown or described may be executed in an order different from those herein. Optionally, the modules or steps are fabricated separately as individual integrated circuit modules, or a plurality of modules or steps are fabricated as a single integrated circuit module to be implemented. In this way, the present disclosure is not limited to any combination of particular hardware and software.

The above examples are merely preferred examples of the present disclosure and are not intended to limit the present disclosure. Various changes and modifications can be made on the present disclosure by a person skilled in the art. Any modifications, equivalent substitutions, improvements, etc. within the principle of the present disclosure are intended to fall within the scope of protection of the present disclosure.

## Claims

1. A passive optical network architecture, comprising a Fiber To The Home, FTTH, optical line terminal, a main unit, and a sub FTTR unit, wherein each FTTH optical line terminal is connected to at least one main unit, each main unit is connected to at least one sub FTTR unit, and
the main unit is configured to establish a forwarding channel between the FTTH optical line terminal and the sub FTTR unit, and forward, at an equal delay, an upstream frame and a downstream frame between the FTTH optical line terminal and the sub FTTR unit through the forwarding channel.

2. The architecture according to claim 1, wherein the main unit is configured to identify a target unit of the downstream frame, filter the downstream frame according to the target unit, and forward, at an equal delay, a downstream frame or broadcast downstream frame belonging to a downstream unit of the main unit to the downstream unit of the main unit, wherein the downstream unit of the main unit is a sub FTTR unit directly connected to the main unit.

3. The architecture according to claim 2, wherein the downstream frame comprises at least one of:
a Physical Layer Operations, Administration and Maintenance, PLOAM, message;
a bandwidth map, BWmap, entry; and
a passive optical network encapsulation frame.

4. The architecture according to claim 3, wherein
the main unit is configured to identify, in a case that the downstream frame is the PLOAM message, a target unit of the PLOAM message according to a Sub FTTR Unit Identity, SFU ID, or an Optical Network Unit Identity, ONU ID, in the PLOAM message; and/or
the main unit is configured to identify, in a case that the downstream frame is the BWmap entry, a target unit of the BWmap entry according to an Allocation Identity, Alloc-ID, in the BWmap entry; and/or
the main unit is configured to identify, in a case that the downstream frame is the passive optical network encapsulation frame, a target unit of the passive optical network encapsulation frame according to a port ID in the passive optical network encapsulation frame.

5. The architecture according to claim 1, wherein
the main unit is configured to convert, in a case that an original standard is different from a target standard, an original-standard message to a target-standard message; each of the original standard and the target standard is an optical network standard; in a case that the original-standard message is a downstream frame received by the main unit from the FTTH optical line terminal, the target-standard message is a downstream frame sent by the main unit to the sub FTTR unit; and in a case that the original-standard message is an upstream frame received by the main unit from the sub FTTR unit, the target-standard message is an upstream frame sent by the main unit to the FTTH optical line terminal.

6. The architecture according to claim 5, wherein
the main unit is configured to convert a plurality of fields in the original-standard message to a plurality of fields in the target-standard message according to a preset standard conversion rule; and
the standard conversion rule comprises at least one of the following:
in a case that a first field is the same as a second field, a field value of the first field is converted to a field value of the second field, wherein the first field is any field in the original-standard message, and the second field is any field in the target-standard message;
in a case that the target-standard message has no field the same as the first field, the first field as a new field is added to the target-standard message;
in a case that the original-standard message has no field the same as the second field, the second field is deleted from the target-standard message; and
in a case that a length of the target-standard message is less than a length of the original-standard message, some fields in the original-standard message are deleted.

7. The architecture according to claim 5, wherein
an FTTH-segment standard comprises at least one of a Gigabit-capable Passive Optical Network, GPON, standard, a symmetric GPON standard, a 10-Gigabit-capable Passive Optical Network, XG-PON, standard, a 10-Gigabit-capable Symmetric Passive Optical Network, XGS-PON, standard, and a 50-Gigabit-capable Passive Optical Network, 50G-PON, standard, wherein the FTTH-segment standard is an optical network standard used between the FTTH optical line terminal and the main unit; and
an FTTR-segment standard comprises at least one of the GPON standard, the symmetric GPON standard, the XG-PON standard, the XGS-PON standard, a G.fin standard, a China Communication Standards Association, CCSA, FTTR standard, and the 50G-PON standard, wherein the FTTR-segment standard is an optical network standard used between the main unit and the sub FTTR unit.

8. The architecture according to claim 7, wherein
the main unit is further configured to directly convert the downstream frame from the FTTH-segment standard to the FTTR-segment standard, or convert the downstream frame to an intermediate standard and then convert the intermediate standard to the FTTR-segment standard, wherein the intermediate standard is a network standard other than the optical network standard; and
the main unit is further configured to directly convert the upstream frame from the FTTR-segment standard to the FTTH-segment standard, or convert the upstream frame to the intermediate standard and then convert the intermediate standard to the FTTH-segment standard.

9. The architecture according to claim 1, wherein
the main unit is configured to buffer the downstream frame from the FTTH optical line terminal for first time and then forward the downstream frame to the sub FTTR unit, to keep a downstream forwarding delay consumed by the main unit for forwarding the downstream frame each time consistent, and buffer the upstream frame from the sub FTTR unit for second time and then forward the upstream frame to the FTTH optical line terminal, to keep an upstream forwarding delay consumed by the main unit for forwarding the upstream frame each time consistent.

10. The architecture according to claim 9, wherein
the main unit is configured to determine, in a case that an original standard is the same as a target standard, the first time and the second time according to downstream processing time and upstream processing time, wherein each of the original standard and the target standard is an optical network standard; and
the main unit is configured to determine, in a case that the original standard is different from the target standard, the first time and the second time according to a rate of the original standard, a rate of the target standard, the downstream processing time, and the upstream processing time.

11. The architecture according to claim 10, wherein
the downstream processing time comprises at least one of:
identification time consumed for identifying the downstream frame;
filtration time consumed for filtering the downstream frame; and
conversion time consumed for performing standard conversion on the downstream frame; and
the upstream processing time comprises at least one of:
identification time consumed for identifying the upstream frame;
conversion time consumed for performing standard conversion on the upstream frame; and
time consumed for performing burst overhead regeneration on the upstream frame.

12. The architecture according to claim 1, further comprising a downstream unit of the sub FTTR unit, wherein each sub FTTR unit is connected to at least one downstream unit of the sub FTTR unit, and
the sub FTTR unit is configured to establish a forwarding channel between the main unit and the downstream unit of the sub FTTR unit, forward, at an equal delay, the downstream frame from the main unit to the downstream unit of the sub FTTR unit through the forwarding channel, and forward, at an equal delay, the upstream frame from the downstream unit of the sub FTTR unit to the main unit through the forwarding channel.

13. A data transmission method, applied to a passive optical network architecture, wherein the architecture comprises a Fiber To The Home, FTTH, optical line terminal, a main unit, and a sub FTTR unit, each FTTH optical line terminal is connected to at least one main unit, and each main unit is connected to at least one sub FTTR unit; and the method comprises:
forwarding, at an equal delay, a downstream frame from the FTTH optical line terminal to the sub FTTR unit through a forwarding channel between the FTTH optical line terminal and the sub FTTR unit, and forwarding, at an equal delay, an upstream frame from the sub FTTR unit to the FTTH optical line terminal through the forwarding channel, wherein the forwarding channel is established by the main unit.

14. A main unit, applied to a passive optical network architecture, wherein the passive optical network architecture comprises a Fiber To The Home, FTTH, optical line terminal, a main unit, and a sub FTTR unit, each FTTH optical line terminal is connected to at least one main unit, each main unit is connected to at least one sub FTTR unit, and
the main unit is configured to establish a forwarding channel between the FTTH optical line terminal and the sub FTTR unit, and forward, at an equal delay, an upstream frame and a downstream frame between the FTTH optical line terminal and the sub FTTR unit through the forwarding channel.
